Europäisches Patentamt

European Patent Office

Office européen des brevets

(19)

(11) Publication number: **0 247 658**
A2

# EUROPEAN PATENT APPLICATION

(12)

(21) Application number: **87200824.8**

(22) Date of filing: **04.05.87**

(51) Int. Cl.⁴: **C 08 L 95/00**
// C08K3/34

(30) Priority: **05.05.86 NL 8601144**

(71) Applicant: **Kimmenade Nederland B.V., Vossenbeemd 9, NL-5705 CL Helmond (NL)**

(43) Date of publication of application: **02.12.87**
**Bulletin 87/49**

(72) Inventor: **van de Kimmenade, Martinus Antonius Jacobus, Geldropseweg 33, NL-5731 AA Mierlo (NL)**

(84) Designated Contracting States: **AT BE CH DE ES FR GB GR IT LI LU NL SE**

(74) Representative: **Noz, Franciscus Xaverius, Ir., Boschdijk 155 P.O. Box 645, NL-5600 AP Eindhoven (NL)**

(54) **A process for the preparation of a curable emulsion on basis of bitumen.**

(57) A process for the preparation of a curable emulsion on basis of bitumen in an aqueous mixture comprising additives and, if desired, latex particles, whereby as an accelerator agent a fluorosilicate is used.

EP 0 247 658 A2

-1-

A process for the preparation of a
curable emulsion on basis of bitumen.

The invention is concerning a process for the preparation of a curable emulsion on basis of bitumen in an aqueous mixture comprising additives and, if desired, latex particles.

Such a process for the coagulation of bitumen comprising emulsions is known from Dutch patent application 7908606. According to this process the coagulation is reached within a period of some seconds (6-15 seconds) by the addition to the bitumen comprising emulsion of hydrogen peroxide and alkaline thiosulphate, so that the curing time is mainly dependent on the pH-value of the emulsion. This is a system difficultly to be used in practice, mainly used for filling holes in walls, which filling gives a quick curing process.

The object of the present patent application is to find a system for curing of a bitumen comprising emulsion, which system can be used more generally and in which curing can be regulated easily in which the curing can be obtained within some minutes and in which process the prepared mixture can be supplied by spraying or by spreading. This object can be obtained by carrying out a process according to the invention, which process is characterized by the fact that in the preparation of the curable emulsion on basis of bitumen in an aqueous mixture comprising additives and, if desired, latex particles, an accelerating agent has been used on basis of a fluorosilicate. Such a mixture can be supplied by spraying, using a spray gun or the mixture can be applied with means normally used for coating a surface such a drawing means, a brush or a knife, dependent on the thickener to be added. If a thickener is added, then a paste will be obtained that can be applied on a surface by spreading, so that a coating is obtained that cures within several minutes and in which process water is separated from the applied coating. After about half an hour a complete curing is obtained, which especially is of importance when a coating has to be applied on a roof. In regard with known systems the advantage of the system according to the process of the invention is that such a coating can be applied even under wet weather circumstances, without the danger of "flushing away" of the applied coating.

An example of the fluorosilicate to be used as the accelerator is sodium fluorosilicate ($Na_2SiF_6$), preferably in a basic mixture. Besides this it has advantages to add as a substrate for the accelerating agent bentonite. A composition to be preferably used for the curing agent comprises 47% $Na_2SiF_6$, 3% bentonite, 0.1% KOH and 49.9% water.

Independent of the fact how the mixture is applied e.g. by spraying or mechanically by spreading, one starts with an aqueous mixture of bitumen and water, preferably in a weight ratio of 60:40, to which mixture one adds a small amount of emulgating agent and caustic soda, in order to obtain an alkaline mixture. The quality of the bitumen comprising emulsion can be varied by the addition of a certain amount of a rubber latex (latex of chloroprene) preferably in an amount of 14-21% latex. The preparation of such a bitumen comprising emulsion is carried out by heating bitumen to 120-140 $^\circ$C and by heating water to 55-57 $^\circ$C. To the heated water one adds 0.2-0.5 weight% emulsifying agent and about 1 weight% KOH. By stirring in a colloid mill the water comprising the emulsifying agent and caustic soda is added to the heated bitumen.

By the addition of an accelerating agent to the bitumen comprising emulsion one obtains a mixture to be spread that cures within a few minutes. On the other hand it is possible to add at first to this mixture a thickener, such as methyl cellulose in an amount of 1%, on basis of the bitumen comprising emulsion, so that a product is obtained that can be spread after the addition of the curing agent.

The invention will further be clarified on basis of the following examples.

### Example I

The preparation of a bitumen comprising emulsion that can be coagulated and spread.

Bitumen was heated in an amount of 600 g to a temperature of 130 $^{o}$C and 395 g water was heated to 56 $^{o}$C to which water one added 1.4 g emulsifying agent "Tensia" and 4 g KOH. By stirring one added to the heated bitumen in a colloid mill the aqueous mixture, so that the starting material was obtained for the bitumen comprising emulsion.

Besides this, an accelerator or a curing agent was prepared by the addition to 49.9 g water of 0.1 g KOH and then 3 g bentonite and 47 g $Na_2SiF_6$. This accelerating agent was added in an amount of 100 g to 1000 g bitumen comprising emulsion at a temperature of 20 $^{o}$C, during which one also added to the emulsion 1 g 10% KOH. By using a sprayer comprising two compartments, through one of which the emulsion could be applied and through the other one the accelerating agent, so that from the sprayer a mixture was obtained comprising one part accelerating agent for ten parts emulsion, which mixture was applied as a coating on a surface after which a cured mixture was obtained within 9 minutes.

### Example II

The process of example I was repeated, however, by replacing 100 g bitumen in the first emulsion by 100 g chloroprene latex. In this way a more elastic coating was obtained.

### Example III

The process of example I was repeated, however, with the difference that to the bitumen comprising aqueous emulsion one added 10 g methyl cellulose as thickening agent. By doing so, a product was obtained that could not be spraid but that could be spread, that after mixing with the accelerating agent and by pouring the mixture over the surface to be coated and dividing it with a brush or drawing means, the layer could dry at open air.

### Example IV

The process according to example III was repeated, however, to the bitumen comprising emulsion an extra amount of 2 g KOH was added, so that the curing rate was increased.

-1-

CLAIMS

1.        A process for the preparation of a curable emulsion on basis of bitumen in an aqueous mixture comprising additives and, if desired, latex particles, characterized in that as an accelerator agent a fluorosilicate is used.

2.        The process according to claim 1, characterized in that as additive besides the accelerating agent a thickener is added.

3.        The process according to claims 1-2, characterized in that curing is carried out in an alkaline mixture.

4.        The process according to claims 1-3, characterized in that as a substrate for the accelerating agent bentonite is added.

5.        The process according to claim 1, characterized in that as the fluorosilicate $Na_2SiF_6$ is used.

6.        The process according to claims 1-5, characterized in that on basis of 1000 g aqueous emulsion of bitumen being 600 g bitumen and 400 g water, 20-100 g accelerating agent is added as well as so much caustic soda, that the pH-value is maintained above 8.0.

7.        The process according to claims 1 and 4, characterized in that as the accelerating agent an aqueous alkaline mixture is used that besides fluorosilicate also comprises 1-5 weight% bentonite, on basis of the amount of sodium fluorosilicate.